# EUROPÄISCHE PATENTSCHRIFT

(11) **EP 3 936 750 B1**
(45) Veröffentlichungstag und Bekanntmachung des Hinweises auf die Patenterteilung: **07.06.2023**
(21) Anmeldenummer: 21181549.3
(22) Anmeldetag: 24.06.2021
(51) Int. Cl.: F16L 23/14, F24F 13/02

(54) **FLANSCHPROFIL ZUM VERBINDEN VON RECHTECKIGEN LUFTKANALELEMENTEN**
FLANGE PROFILE FOR CONNECTING RECTANGULAR AIR DUCT ELEMENTS
PROFILÉ DE BRIDE PERMETTANT DE RELIER DES ÉLÉMENTS RECTANGULAIRES D'UN CANAL D'AIR

(30) Priorität: 07.07.2020 DE 202020103933 U
(43) Veröffentlichungstag der Anmeldung: 12.01.2022
(73) Patentinhaber: Gebhardt-Stahl GmbH, 59457 Werl (DE)
(72) Erfinder: Schweins, Meinolf, 59457 Werl (DE); Brechlin, Lars, 58710 Menden (DE)
(74) Vertreter: Meinke, Jochen

(56) Entgegenhaltungen:
- DE-A1- 2 630 554
- DE-U1- 8 309 455
- DE-U1-202007 016 521
- DE-U1-202013 105 406
- DE-U1-202017 103 944
- US-A- 4 542 923
- US-A- 4 566 724

## Beschreibung

Die Erfindung betrifft ein Flanschprofil zur Bildung eines Rahmenprofils zum Verbinden von rechteckigen Luftkanalelementen mit einem auf einen Einsteckrand einer Kanalwand des Luftkanalelementes aufschiebbaren, von einem inneren und einem äußeren Profilschenkel gebildeten schlitzförmigen Einführbereich und einer winklig zu diesem nach außen angeordneten Kammer zur Aufnahme von Eckwinkeln, wobei der Endbereich des schlitzförmigen Einführbereiches durch einen aus dem äußeren Profilschenkel geformten Anschlag begrenzt ist, wobei der Anschlag wenigstens einen quer zum äußeren Profilschenkel gerichteten Steg aufweist.

Luftkanäle zu Klimatisierungszwecken bestehen in der Regel aus aneinandergesetzten, im Querschnitt rechteckigen Luftkanalelementen aus Blech. Zum Verbinden der Luftkanalelemente ist es bekannt, an deren Enden jeweils ein flanschförmiges Rahmenprofil vorzusehen. Dieses Rahmenprofil kann aus vier Flanschprofilen und in die Flanschprofile eingesteckten Eckwinkeln gebildet sein. Bei bekannten Luftkanälen wird das Rahmenprofil auf die Enden der Luftkanalelemente aufgeschoben, wobei die Kanalwände in die Einsteckbereiche der Flanschprofile eingesteckt und in diesen aufgenommen sind. Die Rahmenprofile benachbarter Luftkanalelemente werden mittels Schrauben oder dgl. verbunden.

Ein Flanschprofil mit einer Rastverbindung zur Kanalwand ist z.B. unter der Bezeichnung GRAF 20SF (www.grafsystem.it) seit langem bekannt. Dieses Flanschprofil weist am äußeren Profilschenkel eine Rastkante zum Zusammenwirken mit einer Rastrille an der Kanalwand des Luftkanalelementes auf.

Dadurch ist gewährleistet, dass das jeweilige Luftkanalelement nicht wieder aus dem Rahmenprofil herausrutschen kann, ohne dass es einer zusätzlichen Verbindung, z.B. durch Schweißen, bedarf. Neben der Rastrille weist die jeweilige Kanalwand auch Nocken entlang der Rastrille auf, die die Stabilität erhöhen sollen. Allerdings wird dadurch die Systemdichtheit verringert, so dass dieses bekannte System auch aus diesem Grund höhere Dichtigkeitsanforderungen nicht erfüllt.

Ein ähnliches Flanschprofil ist aus DE 20 2017 103 944 U1 bekannt. Bei diesem Flanschprofil ist eine Rastkante am inneren Profilschenkel und zusätzlich am äußeren Profilschenkel eine in Richtung des inneren Profilschenkels vertiefte Druckrille vorgesehen. Dieses Flanschprofil kann zwar ebenfalls ohne Schweißverbindung mit der zugeordneten Kanalwand des Luftkanalelementes durch Einstecken und Einrasten verbunden werden, durch die Ausbildung der Rastkante am inneren Profilschenkel erfüllt dieses Flanschprofil ebenfalls keine höheren Dichtigkeitsanforderungen.

Ein Flanschprofil mit den Merkmalen des Oberbegriffs des Patentanspruchs 1 ist aus US 4 542 923 A und US 4 566 724 A bekannt. Weitere Flanschprofile sind aus DE 20 2013 105 406 U1, DE 20 2007 016 521 U1, DE 83 09 455 U1 und DE 26 30 554 A1 bekannt.

Aufgabe der Erfindung ist, die Dichtigkeit zwischen dem jeweiligen Flanschprofil und der zugeordneten Kanalwand eines Luftkanalelementes zu erhöhen und die Rastverbindung zwischen dem jeweiligen Flanschprofil und der zugeordneten Kanalwand zu verbessern.

Diese Aufgabe wird bei einem Flanschprofil der eingangs bezeichneten Art erfindungsgemäß dadurch gelöst, dass am äußeren Profilschenkel außenseitig eine in den Einführbereich ragende, zum Anschlag parallele Rastkante zum Zusammenwirken mit einer Rastrille an der Kanalwand des Luftkanalelementes gebildet ist, wobei die Rastkante aus dem freien Randbereich des äußeren Profilschenkels nach innen umgeformt ist.

Durch diese Gestaltung des Flanschprofiles wird die Dichtigkeit verbessert, da der Einsteckrand der Kanalwand nach dem Einstecken definiert am Anschlag anliegt. Da der Anschlag aus dem äußeren Profilschenkel geformt ist, wird durch diesen die Dichtigkeit nicht negativ beeinflusst, da sich der äußere Profilschenkel an der Außenseite des Luftkanalelementes befindet. Innenseitig weist der Flansch glatte Außenflächen auf. Durch die Rastkante im freien Randbereich des äußeren Profilschenkels ist bei entsprechender Dimensionierung des Einsteckrandes der in den Einführbereich einzurastenden Kanalwand gewährleistet, dass die Kanalwand mit ihrer Rastrille mit leichtem Übermaß zwischen der Rastkante und dem Anschlag eingespannt ist. Dadurch wird die Rast- und Dichtwirkung weiter verbessert.

Dabei ist bevorzugt vorgesehen, dass der Anschlag sich über der gesamten Breite des schlitzförmigen Einführbereiches erstreckt. Dadurch wird die Dichtigkeit des Profils weiter verbessert.

Besonders bevorzugt ist vorgesehen, dass im Einführbereich angrenzend an den Anschlag eine Dichtung oder Dichtmasse angeordnet ist. Die Dichtigkeit wird dadurch noch vergrößert. Außerdem ist in Verbindung mit dem Anschlag sichergestellt, dass der Rand der jeweiligen Kanalwand in die Dichtung bzw. Dichtmasse dichtend eingreift.

Die vorstehende Aufgabe wird auch mit einem Luftkanal mit den Merkmalen des Patentanspruchs 5 gelöst.

Dabei ist vorteilhaft vorgesehen, dass im jeweiligen Einführbereich angrenzend an den Anschlag eine Dichtung angeordnet ist, wodurch die Dichtigkeit noch vergrößert wird.

Besonders bevorzugt ist vorgesehen, dass jede Kanalwand eine Rastrille und jedes Flanschprofil am äußeren Profilschenkel eine in den Einführbereich ragende, zum Anschlag parallele Rastkante aufweist, wobei hinter der jeweiligen Rastkante die zugeordnete Rastrille eingerastet ist. Der eingesteckte Randbereich der jeweiligen Kanalwand ist dann im Einführschlitz des zugeordneten Flanschprofils eingerastet, so dass es keiner zusätzlichen Sicherung bedarf.

Dabei ist bevorzugt der Abstand zwischen dem Anschlag und der Rastkante höchstens so groß wie der Abstand zwischen der Rastrille und dem Einsteckrand der jeweiligen Kanalwand. Der eingesteckte Randbereich der jeweiligen Kanalwand ist dann im Einführschlitz des zugeordneten Flanschprofils eingespannt, wodurch die Dichtigkeit erhöht wird.

Die Erfindung ist nachstehend anhand der Zeichnung beispielhaft näher erläutert. Diese zeigt in
- Fig. 1: in perspektivischer Darstellung ein mit Flanschprofilen bestücktes einbaufertiges Luftkanalelement,
- Fig. 2: eine Seitenansicht eines Flanschprofils nach einer ersten Ausgestaltung,
- Fig. 3: das Flanschprofil nach Fig. 2 teilweise in perspektivischer Darstellung,
- Fig. 4: eine Teilschnittansicht des Flanschprofils nach Fig. 1 mit eingesteckter Kanalwand,
- Fig. 5: eine Seitenansicht eines Flanschprofils nach einer zweiten Ausgestaltung,
- Fig. 6: eine Teilschnittansicht des Flanschprofils nach Fig. 5 mit eingesteckter Kanalwand,
- Fig. 7: eine Seitenansicht eines Flanschprofils nach einer dritten Ausgestaltung,
- Fig. 8: eine Teilschnittansicht des Flanschprofils nach Fig. 7 mit eingesteckter Kanalwand und in
- Fig. 9: eine Seitenansicht des Flanschprofils nach Fig. 2 mit einer Abwandlung, welche nicht unter den Wortlaut der Ansprüche fällt.

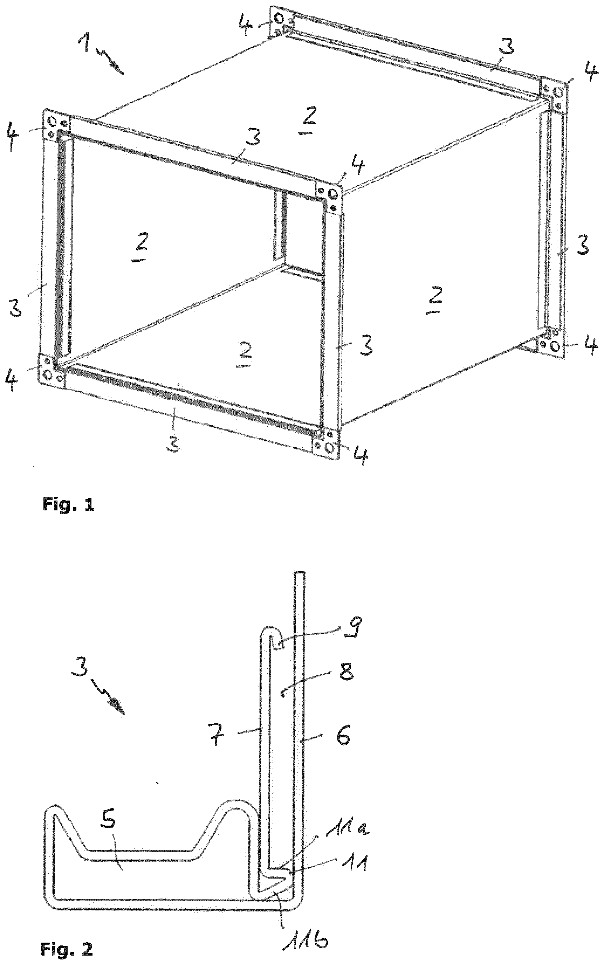

In Fig. 1 ist ein Luftkanalelement 1 dargestellt, welches aus einem rechteckigen Rohr gebildet ist. Dabei ist jede Wand des Rohres von einer einzelnen Kanalwand 2 aus Blech gebildet, wobei alle Kanalwände 2 in der Regel einstückig und umlaufend dicht miteinander verbunden sind. Auf jeden der Einsteckränder 2a der jeweiligen Kanalwand 2 ist jeweils ein nachfolgend näher beschriebenes Flanschprofil 3 aufgeschoben, so dass sich die Flanschprofile 3 über das Luftkanalelement 1 hinaus nach außen erstrecken. In den Eckrandbereichen sind Eckwinkel 4 in Kammern 5 der Flanschprofile 3 so eingeschoben, dass ein Rahmenprofil mit im Wesentlichen gleichförmiger Rahmenfläche gebildet ist, die an der Rahmenfläche eines benachbarten Luftkanalelementes 1 gleicher Bauart befestigt wird. Dabei wird in bekannter Weise zwischen zwei benachbarten Flanschprofilen 3 eine Dichtung angeordnet, die nicht dargestellt ist. Außerdem werden benachbarte Flanschprofile über Klemmelemente miteinander verbunden.

Das jeweilige erfindungsgemäße Flanschprofil 3 ist von einem vorzugsweise kaltgewalzten Blech gebildet. Alternativ kann es z.B. auch aus stranggepresstem Aluminium oder extrudiertem Kunststoff bestehen. Dabei weist das Flanschprofil 3 einen von einem inneren und einem äußeren Profilschenkel 6, 7 gebildeten, einseitig offenen schlitzförmigen Einführbereich 8 auf, der in der Gebrauchslage über den Randbereich einer Kanalwand 2 geschoben wird. Ferner weist das Flanschprofil 3 winklig zum schlitzförmigen Einführbereich 8 die Kammer 5 zur Aufnahme eines Eckwinkels 4 auf.

Am äußeren Profilschenkel 7 ist außenseitig eine in den Einführbereich 8 ragende Rastkante 9 ausgeformt, die aus dem freien Randbereich des äußeren Profilschenkels 7 z.B. hakenförmig nach innen umgeformt ist. Diese Rastkante 9 ist in nachfolgend näher beschriebener Weise zum Zusammenwirken mit einer Rastrille 10 an der Kanalwand 2 des Luftkanalelementes 1 ausgebildet. Diese Rastrille 10 ist geeignet in die Kanalwand 2 eingeformt.

Wesentlich für das Flanschprofil 3 ist nun, dass der Endbereich des schlitzförmigen Einführbereiches 8 durch einen aus dem äußeren Profilschenkel 7 geformten, zur Rastkante 9 parallelen Anschlag 11 begrenzt ist. Dieser Anschlag 11 erstreckt sich bevorzugt über die gesamte Breite des schlitzförmigen Einführbereiches 8 und weist wenigstens einen quer zum äußeren Profilschenkel 7 gerichteten Steg 11a auf.

Der Abstand zwischen dem Anschlag 11 bzw. dem Steg 11a und der Rastkante 9 ist dabei höchstens so groß, wie der Abstand zwischen der Rastrille 10 und dem Einsteckrand 2a der jeweiligen Kanalwand 2.

Wenn bei der Montage der Randbereich einer Kanalwand 2 in den schlitzförmigen Einführbereich 8 eingesteckt wird, rastet die Rastrille 10 hinter der jeweiligen Rastkante 9 des Flanschprofiles 3 unter Anlage des Einsteckrandes 2a der Kanalwand 2 am Anschlag 11 bzw. dem Steg 11a ein, wobei die Kanalwand 2 mit ihrer Rastrille 10 mit leichtem Übermaß zwischen der Rastkante 9 und dem Anschlag 11 bzw. Steg 11a eingespannt und eingerastet ist, wodurch die Dichtigkeit der Verbindung erhöht ist. Da der Anschlag 11 aus dem äußeren Profilschenkel 7 ausgeformt ist, wird durch diesen die Dichtigkeit nicht negativ beeinflusst, da sich der äußere Profilschenkel 7 an der Außenseite des Luftkanalelementes 1 befindet.

Zur Erhöhung der Dichtigkeit und des Einspanneffektes kann, was zeichnerisch nicht dargestellt ist, vorgesehen sein, dass im Einführbereich 8 angrenzend an den Anschlag 11 eine Dichtung angeordnet ist.

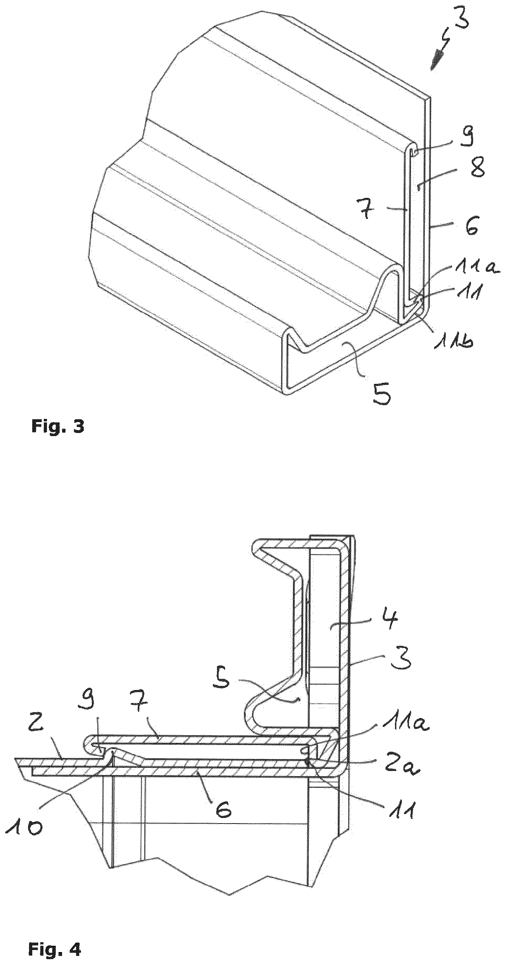

Bei der Ausgestaltung des Flanschprofiles 3 nach Fig. 2 bis 4 geht der Steg 11a des Anschlages 11 in einen schräg verlaufenden zweiten Steg 11b über, der seinerseits in die Begrenzung der Kammer 5 des Flanschprofiles 3 übergeht.

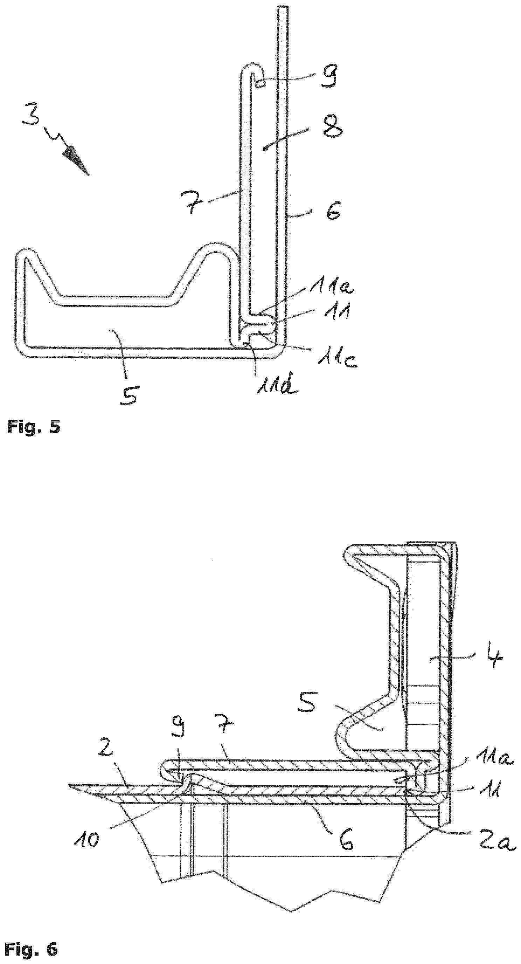

Demgegenüber geht bei einer zweiten Ausgestaltung des Flanschprofiles 3 nach den Fig. 5 und 6 der Steg 11a des Anschlages 11 in einen zweiten Steg 11c des Anschlages 11 über, der gegenüber dem Steg 11a um 180° umgelegt und parallel zum Steg 11a ausgerichtet ist. Dieser zweite Steg 11c geht endseitig in einen dazu quer gerichteten Steg 11d über, der sich in die Begrenzung der Kammer 5 fortsetzt.

Die Funktionsweise des Flanschprofiles 3 nach den Fig. 5 und 6 unterscheidet sich dabei nicht von derjenigen nach dem Flanschprofil nach Fig. 2 bis 4.

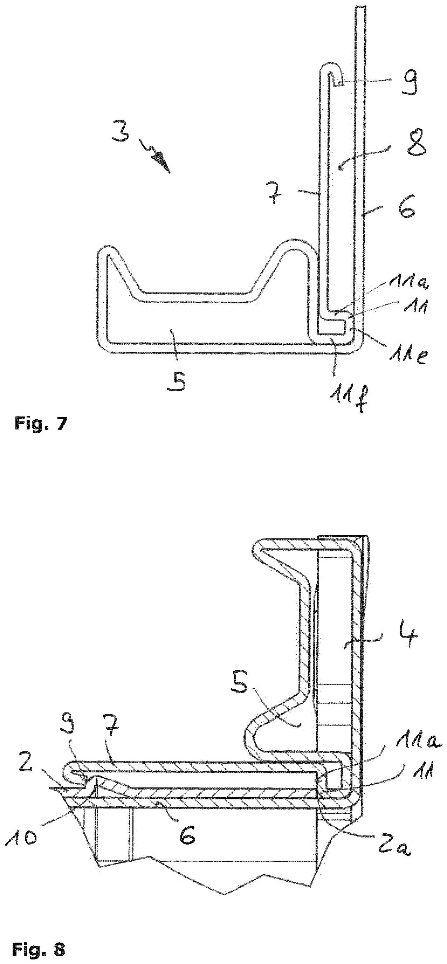

In den Fig. 7 und 8 ist eine dritte Ausgestaltung des Flanschprofiles 3 dargestellt, welche sich von den vorgenannten Ausgestaltungen dadurch unterscheidet, dass der Steg 11a des Anschlages 11 in einen quer gerichteten Steg 11e übergeht, der parallel zum inneren Profilschenkel 6 ausgerichtet ist und an diesem anliegt. Dieser Steg 11e geht in einen dazu quer gerichteten weiteren Steg 11f über, der parallel zum Steg 11a und mit Abstand zu diesem angeordnet ist und in die Begrenzung der Kammer 5 des Flanschprofiles 5 übergeht.

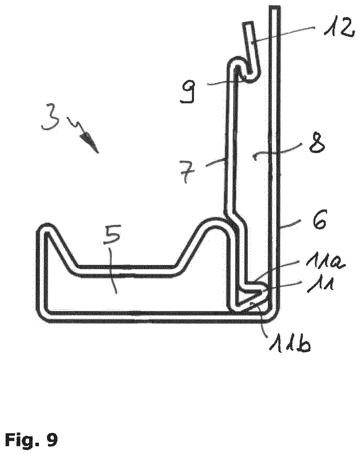

In Fig. 9 ist ein weiteres Flanschprofil 3 dargestellt, das im Wesentlichen denjenigen nach Fig. 2 entspricht, allerdings nicht unter den Wortlaut der Ansprüche fällt. In Abwandlung ist allerdings vorgesehen, dass die Rastkante 9 bogenförmig in eine Einführschräge 12 übergeht. Durch die bogenförmige Umlegung mit Einführschräge 12 ergibt sich eine Art Einfädelhilfe für das Aufschlagen des Flanschprofils 3 auf die Kanalwand 2. Diese zusätzliche Einführschräge 12 kann auch bei den anderen Ausgestaltungen des Flanschprofils 3 vorgesehen sein.

Natürlich ist die Erfindung nicht auf die dargestellten Ausführungsbeispiele begrenzt, weitere Ausgestaltungen sind möglich, ohne den Grundgedanken der Erfindung zu verlassen. So kann, wie vorerwähnt, insbesondere im Einführbereich 8 angrenzend an den Anschlag 11 zusätzlich eine Dichtung bzw. Dichtmasse angeordnet sein.

### Bezugszeichenliste:

- 1: Luftkanalelement
- 2: Kanalwand
- 2a: Einsteckrand
- 3: Flanschprofil
- 4: Eckwinkel
- 5: Kammer
- 6: innerer Profilschenkel
- 7: äußerer Profilschenkel
- 8: Einführbereich
- 9: Rastkante
- 10: Rastrille
- 11: Anschlag
- 11a: Steg
- 11b: Steg
- 11c: Steg
- 11d: Steg
- 11e: Steg
- 11f: Steg
- 12: Einführschräge

## Patentansprüche

1. Flanschprofil zur Bildung eines Rahmenprofils zum Verbinden von rechteckigen Luftkanalelementen (1) mit einem auf einen Einsteckrand (2a) einer Kanalwand (2) des Luftkanalelementes (1) aufschiebbaren, von einem inneren und einem äußeren Profilschenkel (6,7) gebildeten schlitzförmigen Einführbereich (8) und einer winklig zu diesem nach außen angeordneten Kammer (5) zur Aufnahme von Eckwinkeln (4), wobei der Endbereich des schlitzförmigen Einführbereiches (8) durch einen aus dem äußeren Profilschenkel (7) geformten Anschlag (11) begrenzt ist, wobei der Anschlag (11) wenigstens einen quer zum äußeren Profilschenkel (7) gerichteten Steg (11a) aufweist,
**dadurch gekennzeichnet,**
**dass** am äußeren Profilschenkel (7) außenseitig eine in den Einführbereich (8) ragende, zum Anschlag (11) parallele Rastkante (9) zum Zusammenwirken mit einer Rastrille (10) an der Kanalwand (2) des Luftkanalelementes (1) gebildet ist, wobei die Rastkante (9) aus dem freien Randbereich des äußeren Profilschenkels (7) nach innen umgeformt ist.

2. Flanschprofil nach Anspruch 1,
**dadurch gekennzeichnet,**
**dass** der Anschlag (11) sich über der gesamten Breite des schlitzförmigen Einführbereiches (8) erstreckt.

3. Flanschprofil nach Anspruch 1 oder 2,
**dadurch gekennzeichnet,**
**dass** im Einführbereich (8) angrenzend an den Anschlag (11) eine Dichtung oder Dichtmasse angeordnet ist.

4. Luftkanal mit rechteckigen Luftkanalelementen (1) mit jeweils vier Kanalwänden (2) und mit jeweils wenigstens einem Rahmenprofil, welches aus vier über Eckwinkel (4) miteinander verbundenen Flanschprofilen (3) nach Anspruch 1, 2 oder 3 gebildet ist.

5. Luftkanal nach Anspruch 4,
**dadurch gekennzeichnet,**
**dass** jede Kanalwand (2) eine Rastrille (10) aufweist, wobei hinter der jeweiligen Rastkante (9) die zugeordnete Rastrille (10) eingerastet ist.

6. Luftkanal nach Anspruch 5,
**dadurch gekennzeichnet,**
**dass** der Abstand zwischen dem Anschlag (11) und der Rastkante (9) höchstens so groß ist wie der Abstand zwischen der Rastrille (10) und dem Einsteckrand (2a) der jeweiligen Kanalwand (2).

## Claims

1. Flange profile for forming a frame profile for connecting rectangular air duct elements (1) with a slot-shaped insertion region (8), which can be pushed onto an insertion edge (2a) of a duct wall (2) of the air duct element (1) and is formed by an inner and an outer profile leg (6, 7), and
a chamber (5) arranged outwardly at an angle thereto for receiving corner angles (4), wherein the end region of the slot-shaped insertion region (8) is delimited by a stop (11) formed from the outer profile leg (7), wherein the stop (11) has at least one web (11a) oriented transversely to the outer profile leg (7),
**characterised in that**
on the outside of the outer profile leg (7), a latching edge (9) projecting into the insertion region (8) and parallel to the stop (11) is formed for cooperation with a latching groove (10) on the duct wall (2) of the air duct element (1), the latching edge (9) being formed by inward reforming of the free edge region of the outer profile leg (7).

2. Flange profile according to claim 1,
**characterised in that**
the stop (11) extends over the entire width of the slot-shaped insertion region (8).

3. Flange profile according to claim 1 or 2,
**characterised in that**
a seal or sealing compound is arranged in the insertion region (8) adjacent to the stop (11).

4. Air duct comprising rectangular air duct elements (1) each with four duct walls (2) and each with at least one frame profile, which is formed from four flange profiles (3) according to claim 1, 2 or 3 that are connected to one another via corner angles (4).

5. Air duct according to claim 4,
**characterised in that**
each duct wall (2) has a latching groove (10), the associated latching groove (10) being latched behind the respective latching edge (9).

6. Air duct according to claim 5,
**characterised in that**
the distance between the stop (11) and the latching edge (9) is at most as great as the distance between the latching groove (10) and the insertion edge (2a) of the respective duct wall (2).

## Revendications

1. Profil de bride pour la formation d'un profil de cadre pour la liaison d'éléments de canal d'air (1) rectangulaires avec une zone d'introduction (8) en forme de fente formée par une branche de profil (6, 7) intérieure et une branche de profil extérieure, enfilable sur un bord d'enfichage (2a) d'une paroi de canal (2) de l'élément de canal d'air (1) et une chambre (5) agencée de manière angulaire à celle-ci vers l'extérieur,
pour la réception de cornières d'angle (4), dans lequel la zone d'extrémité de la zone d'introduction (8) en forme de fente est délimitée par une butée (11) formée à partir de la branche de profil (7) extérieure, dans lequel la butée (11) présente au moins une nervure (11a) dirigée transversalement à la branche de profil (7) extérieure,
**caractérisé en ce que**
un bord d'encliquetage (9) parallèle à la butée (11), dépassant dans la zone d'introduction (8) est formé au niveau de la branche de profil (7) extérieure pour la coopération avec une rainure d'encliquetage (10) au niveau de la paroi de canal (2) de l'élément de canal d'air (1), dans lequel le bord d'encliquetage (9) est formé vers l'intérieur à partir de la zone de bord libre de la branche de profil (7) extérieure.

2. Profil de bride selon la revendication 1,
**caractérisé en ce que**
la butée (11) s'étend sur la largeur entière de la zone d'introduction (8) en forme de fente.

3. Profil de bride selon la revendication 1 ou 2,
**caractérisé en ce que**
un joint étanche ou une masse étanche est agencé(e) dans la zone d'introduction (8) de manière contiguë à la butée (11).

4. Canal d'air avec des éléments de canal d'air (1) rectangulaires avec respectivement quatre parois de canal (2) et avec respectivement au moins un profil de cadre, qui est formé à partir de quatre profils de bride (3) reliés les uns aux autres par le biais de cornières d'angle (4) selon la revendication 1, 2 ou 3.

5. Canal d'air selon la revendication 4,
**caractérisé en ce que**
chaque paroi de canal (2) présente une rainure d'encliquetage (10), dans lequel la rainure d'encliquetage (10) associée est encliquetée derrière le bord d'encliquetage (9) respectif.

6. Canal d'air selon la revendication 5,
**caractérisé en ce que**
la distance entre la butée (11) et le bord d'encliquetage (9) est au plus aussi grande que la distance entre la rainure d'encliquetage (10) et le bord d'enfichage (2a) de la paroi de canal (2) respective.
